# EUROPEAN PATENT APPLICATION

(11) **EP 2 521 086 A1**
(43) Date of publication of application: **07.11.2012**
(21) Application number: 10840823.8
(22) Date of filing: 04.11.2010
(51) Int. Cl.: G06Q 50/00

(54) **AUTOMATIC EASE-OF-DISMANTLING EVALUATION DEVICE, AUTOMATIC EASE-OF-DISMANTLING EVALUATION METHOD AND AUTOMATIC EASE-OF-DISMANTLING EVALUATION PROGRAM**

(30) Priority: 28.12.2009 JP 2009297961
(71) Applicant: Hitachi, Ltd., Chiyoda-ku Tokyo 100-8280 (JP)
(72) Inventor: AKAHORI Tomohiko, Tokyo 100-8220 (JP); HIROSHIGE Yuzo, Tokyo 100-8220 (JP)
(74) Representative: Strehl Schübel-Hopf & Partner
(86) International application number: PCT/JP2010/069603
(87) International publication number: WO 2011/080964

(57) **Abstract**

There are provided an auto-disassemblability evaluation device, an auto-disassemblability evaluation method, and an auto-disassemblability evaluation program that are capable of setting a part to be a recycling target in accordance with a value of a material configuring a part. An auto-disassemblability evaluation device that evaluates disassembly availability of a product configured by a plurality of parts includes: a storage unit configured to store a material of the parts, a level of importance indicating the value of the material, and a weight of the parts so as to be associated with the parts; and a collecting target part setting unit configured to calculate a priority for collecting the parts for every part based on the material of the parts, the level of importance, and the weight of the parts stored in the storing unit and set a product having a higher calculated priority as a collecting target part.

## Description

### FIELD OF THE INVENTION

The present invention relates to a technology of disassembling a product, and more particularly, to technology of estimating a disassembling time of a product or determining a recycle condition.

### BACKGROUND OF THE INVENTION

In order to effectively utilize limited resources, manufactures are making an effort to recycle used products. Further, recently, precious metal or rare metal is used in home appliances. However, even though the amount of consumed precious metal or rare metal is negligible, the importance of recycling is great because the precious metal or rare metal is expensive and exhaustible. Usually, the reuse of the materials by recycling has a lower environmental load than a case when a material is manufactured from natural resources so that the recycling may lead to the reduction in environmental load. From the above-mentioned background, in order to encourage the recycling, it is essential to increase the recycling efficiency to enable recycling at a low cost.

As a method for increasing the recycling efficiency, there is a method that a product is designed in consideration of recycling from the design stage of the product. In order to support the method, a method of evaluating of recyclability such as a recyclable weight of a product or recycling cost and suggesting a point to be improved has been developed so far.

For example, in Japanese Patent Application Laid-Open No. 2007-42030, as an example of a method of evaluating the recyclability, information such as materials, weight, or a disassembling method of parts that configure a product and information such as recycling availability or a processing cost are used to calculate recyclable weight or recycling cost and evaluate the recyclability of the product.

Further, in recent years, as a method of recycling at a low cost, as disclosed in Sharp Technical Journal, April 2004, No. 20, Volume 88, general article "Auto-disassembly System Using Shape Memory Materials" (http://www.sharp.co.jp/corporate/rd/23/23-1.html), an automatic disassembling device that simultaneously disassembles all parts by inserting the entire product into the device and applying heat or impact has been developed.

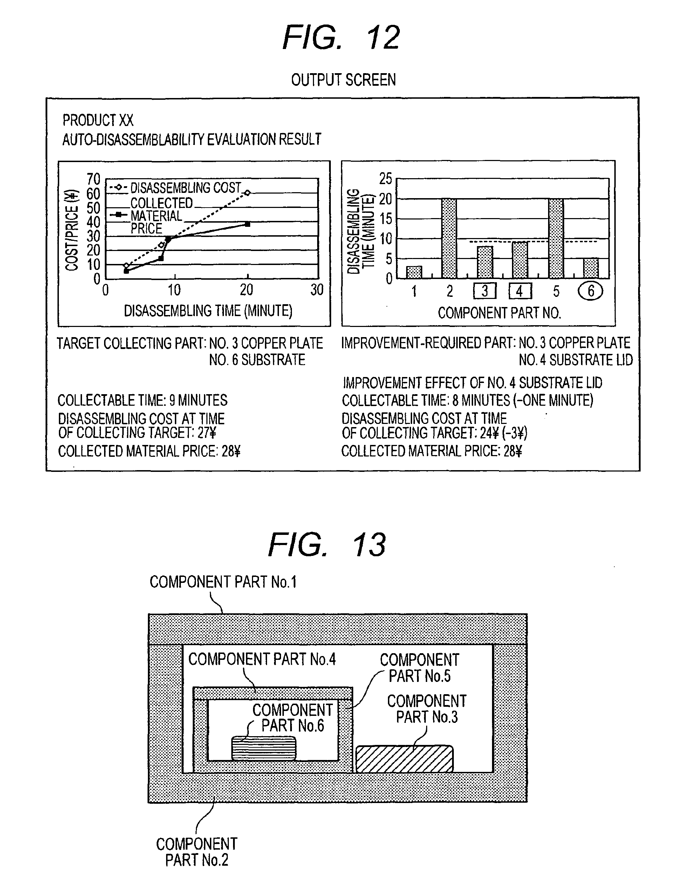

Here, the difference between a case that manually disassembles a product (manual disassembly) and a case that automatically disassembles a product (automatic disassembly) will be described. For example, as shown in Fig. 13, a product in which a component part No. 6 is covered with lid-shaped component part No. 1 and component part No. 4 will be considered. When it is assumed that the component part No. 6 is disassembled to be collected, in case of the manual disassembly, the component part No. 6 is required to be removed after disassembling the component parts Nos. 1 and 4. If it takes one minute, three minutes, and two minutes to disassemble the component parts Nos. 1, 4, and 6, respectively, it can be seen that it takes six minutes to collect the component part No. 6.

In contrast, in case of automatic disassembly, the component parts Nos. 1, 4, and 6 are simultaneously disassembled. If it is assumed that the disassembling time of the parts is the same as the manual disassembling time, the component part No. 6 may not be collected until the component parts Nos. 1 and 4 are disassembled. Therefore, the component part No. 6 may be disassembled in two minutes, but the component part No. 6 should stay between the component parts Nos. 4 and 5 until three minutes elapses to disassemble the component part No. 4. As a result, it can be seen that it takes three minute to collect the component part No. 6.

As described above, when a part which is a collecting target is collected, in the manual disassembly, the total disassembling times of parts that are required to be disassembled becomes a collectable time of a target part. In contrast, in the automatic disassembly, the longest disassembling time of disassembling times for parts that are required to be disassembled becomes a collectable time. Further, in the automatic disassembly, N products can be disassembled at a time. Accordingly, it is considered that the disassembling time per one product is 1/N and the disassembling cost may be significantly reduced as compared with the manual disassembly.

As described above, if the amount of rare metal contained in the product is small and the disassembling cost is not lower than that of the current situation where the product is manually disassembled, the economic efficiency of recycling may not be achieved. Therefore, in the future when the rare metal collection is regarded as being important, the automatic disassembly is sufficiently considered as a main disassembling method.

### SUMMARY OF THE INVENTION

Even though a method of evaluating recyclability of a product as disclosed in Japanese Patent Application Laid-Open No. 2007-42030 has been developed, it is assumed that the disassembling is manually performed in the above method. Further, in the method disclosed in Sharp Technical Journal, even though the product is automatically disassembled, the structure of the product is not considered. Therefore, the evaluation methods according to the related arts have a problem in that the recyclability of the automatic disassembly which will be a main stream in the future may not be evaluated.

The present invention has been made in an effort to provide an auto-disassemblability evaluation device, an auto-disassemblability evaluation method, and an auto-disassemblability evaluation program that are capable of estimating a collectible time of a product by automatic disassembly in consideration of the structure of the product and evaluating the recyclability of the automatic disassembly.

Further, the recycling in the related art is aimed at making the recycling rate that indicates a weight of recyclable parts with respect to a weight of a product higher than a value set by a law. Therefore, the improvement of the recyclability of a part having larger recycle weight has been prioritized. However, the weight of the rare metal or precious metal is small, but the rare metal or precious metal is expensive and exhaustible. Therefore, the recycling of the rare metal or precious is considered to be important regardless of the presence of the laws or regulations. In other words, it is considered that it is important to determine parts to be recycled in accordance with the value of materials in the future.

The present invention has also been made in an effort to provide an auto-disassemblability evaluation device, an auto-disassemblability evaluation method, and an auto-disassemblability evaluation program that is capable of setting a part to be a target for recycling in accordance with the value of materials that configure a part.

An embodiment of the present invention provides an auto-disassemblability evaluation device that evaluates disassembly availability of a product configured by a plurality of parts, including: a storage unit configured to store a material of the parts, a level of importance indicating the value of the material, and a weight of the parts so as to be associated with the parts; and a collecting target part setting unit configured to calculate a priority for collecting the parts for every part based on the material of the parts, the level of importance, and the weight of the parts stored in the storing unit and set a product having a higher calculated priority as a collecting target part.

In the auto-disassemblability evaluation device according to the present invention, the stoage unit may further store hierarchical information indicating a hierarchical relationship between the part and another part having a possibility of hindering the collection of the part and a disassembling time of the part so as to be associated with the parts. The auto-disassemblability evaluation device may further include: a collectable time deriving unit configured to specify the other part which is a higher hierarchial part of the collecting target part based on the collecting target part and the hierarchial information and set a longer disassembling time between a disassembling time of the specified other part and a disassembling time of the collecting target part as a collectable time of the collecting target part.

The auto-disassemblability evaluation device according to the present invention may further include an improvement required part deriving unit configured to determine whether the disassembling time of the other part which is the higher hierarchical part of the collecting target part is longer than the disassembling time of the collecting target part, set the other part which is the higher hierarchical part of the collecting target part as an improvement required part that lowers a disassembly availability of the product if it is determined that the disassembling time of the other part which is the higher hierarchical part of the collecting target part is longer than the disassembling time of the collecting target part, and set the collecting target part as an improvement required part if it is determined that the disassembling time of the other part which is the higher hierarchical part of the collecting target part is not longer than the disassembling time of the collecting target part.

In the auto-disassemblability evaluation device according to the present invention, the storage unit may further store a unit price of the material and the collectable time set by the collectable time deriving unit so as to be associated with the collecting target part. The auto-disassemblability evaluation device may further include: a controller configured to calculate a price of the part and a price of the collecting target part based on the unit price of the material, the weight of the part, and the weight of the collecting target part and calculate a price of the collected material which is collected until the collectable time of the collecting target part based on the calculated price of the part, the calculated price of the collecting target part, the collectable time of the part, the collectable time of the collecting target part, and a predetermined disassembling cost of the product per unit time.

Another embodiment of the present invention provides an auto-disassemblability evaluation method that is performed by the auto-disassemblability evaluation device and an auto-disassemblability evaluation program.

According to the present invention, it is possible to provide an auto-disassemblability evaluation device, an auto-disassemblability evaluation method, and an auto-disassemblability evaluation program that are capable of estimating a collectible time of a product by automatic disassembly in consideration of the structure of the product and evaluating the recyclability of the automatic disassembly.

According to the present invention, it is possible to provide an auto-disassemblability evaluation device, an auto-disassemblability evaluation method, and an auto-disassemblability evaluation program that are capable of setting a part to be a target of recycling in accordance with a value of materials that configure a part.

### BRIEF DESCRIPTION OF THE DRAWINGS

Fig. 1 is a block diagram illustrating a configuration of an auto-disassemblability evaluation device according to an embodiment;
Fig. 2A is a view illustrating an example of data stored in a material information table;
Fig. 2B is a view illustrating an example of data stored in a part information table;
Fig. 3A is a view illustrating an example of data stored in a product information table;
Fig. 3B is a view illustrating an example of data stored in a disassembly information table;
Fig. 4A is a view illustrating an example of data stored in a disassembly availability evaluation result table;
Fig. 4B is a view illustrating an example of data stored in a cost evaluation result table;
Fig. 5 is a flowchart illustrating evaluating procedures that are performed by an auto-disassemblability evaluation device;
Fig. 6 is a view illustrating an example of an input screen that is displayed by a display device;
Fig. 7 is a flowchart illustrating a procedure of setting a collecting target part shown in Fig. 5;
Fig. 8 is a flowchart illustrating a procedure of deriving a disassembling time shown in Fig. 5;
Fig. 9 is a flowchart illustrating a procedure of deriving a collectable time shown in Fig. 5;
Fig. 10 is a flowchart illustrating a procedure of deriving an improvement required part shown in Fig. 5;
Fig. 11 is a flowchart illustrating a procedure of outputting an evaluation result shown in Fig. 5;
Fig. 12 is a view illustrating a state that a graph created by a display controller is displayed on a display device; and
Fig. 13 is a view illustrating an example of a product which is an evaluating target.

### DETAILED DESCRIPTION OF THE EMBODIMENTS

Hereinafter, an auto-disassemblability evaluation device, an auto-disassemblability evaluation method, and an auto-disassemblability evaluation program according to the present invention will be described in detail with reference to accompanying drawings. The auto-disassemblability evaluation device which will be described below is connected to an automatic disassembling device that automatically disassembles a product, and is a device for supporting the evaluation of an auto-disassemblability and recycling condition of the product by setting a part to be a collecting target (collecting target part) in accordance with a level of importance of a material of the part and estimating a collectible time of the part in consideration of a structure of the product.

In the embodiment, disassembly refers to separating a part from another part adjacent thereto. Further, a disassembling time refers to an elapsed time from a time of starting to disassemble a product to a time of separating a product from the adjacent product. Further, collection refers that a part is individually removed from the automatic disassembling device after disassembling the product. A higher hierarchical part refers to a part that has a possibility of hindering the collection of another part. The disassembly processing time refers to an elapsed time from starting to disassemble the part. Further, a product is configured by at least two parts.

Continuously, an example of a product to be an evaluating target in the auto-disassemblability evaluation device will be described. Fig. 13 is a view illustrating an example of a product which is an evaluating target in the auto-disassemblability evaluation device. As shown in Fig. 13, the evaluating target product is configured by six parts of component part Nos. 1 to 6.

A component part No. 1 is a lid whose material is Fe, a component part No. 2 is a casing whose material is Fe, a component part No. 3 is a copper plate whose material is Cu, a component part No. 4 is a substrate lid whose material is Fe, a component part No. 5 is a substrate casing whose material is Fe, and a component part No. 6 is a substrate whose material is Cu, Au, and an epoxy resin.

The component parts Nos. 3, 4, 5, and 6 are covered with the component parts Nos. 1 and 2 and thus have a structure where the component parts may not be collected unless the component part No. 1 is disassembled. Further, the component part No. 6 is covered with the component parts Nos. 4 and 5 and thus has a structure where the component part may not be collected unless the component part No. 4 is disassembled. Therefore, with respect to the component part No. 6, the component parts Nos. 1 and 4 are higher hierarchical parts. Accordingly, in order to collect the component part No. 6, the component parts Nos. 1 and 4 are necessarily disassembled.

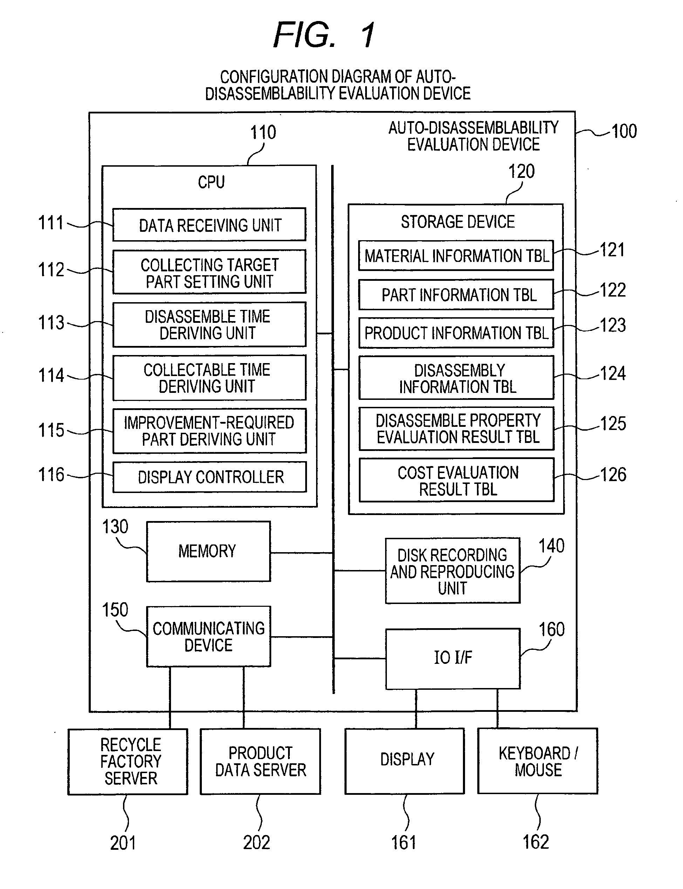

Next, the configuration of the auto-disassemblability evaluation device 100 according to the embodiment will be described with reference to Fig. 1. Fig. 1 is a block diagram illustrating a configuration of the auto-disassemblability evaluation device 100 according to the embodiment.

As shown in Fig. 1, the auto-disassemblability evaluation device 100 is configured to include a CPU 110 that is an information processing device such as a usual PC (personal computer) and performs various arithmetic processing, a storage device 120 in which various data to be described below is stored, a memory 130 which is a work area of the CPU 110, a disk recording and reproducing device 140 that records and reproduces data with respect to a disk type storage medium, a communicating device 150 that communicates via a network with an external storage device such as a recycling factory server 201 that stores information on automatic disassembling device that disassembles a product or a product data server 202 that stores 3DCAD data, a display device 161 such as a display, an input device 162 such as a keyboard or a mouse, and an input/output interface 160 of the display device 161 or the input device 162.

The CPU 110 functionally includes a data receiving unit 111 that receives various data, a collecting target part setting unit 112 that sets a collecting target part, a disassembling time deriving unit 113 that derives a disassembling time, a collectable time deriving unit 114 that derives a collectible time, an improvement required part deriving unit 115 that derives an improvement required part, and a display controller 116 that displays various results on the display device 161.

The storage device 120 includes a material information table 121 in which a price and a level of importance of a material are stored, a part information table 122 in which a name, a component material, a weight, and a disassembling time of a part are stored, a product information table 123 in which component parts or structural information of a product are stored, a disassembly information table 124 in which a disassembling cost per unit time is stored, a disassembly availability evaluation result table 125 in which a collectable time is stored, and a cost evaluation result table 126 in which a disassembling cost is stored.

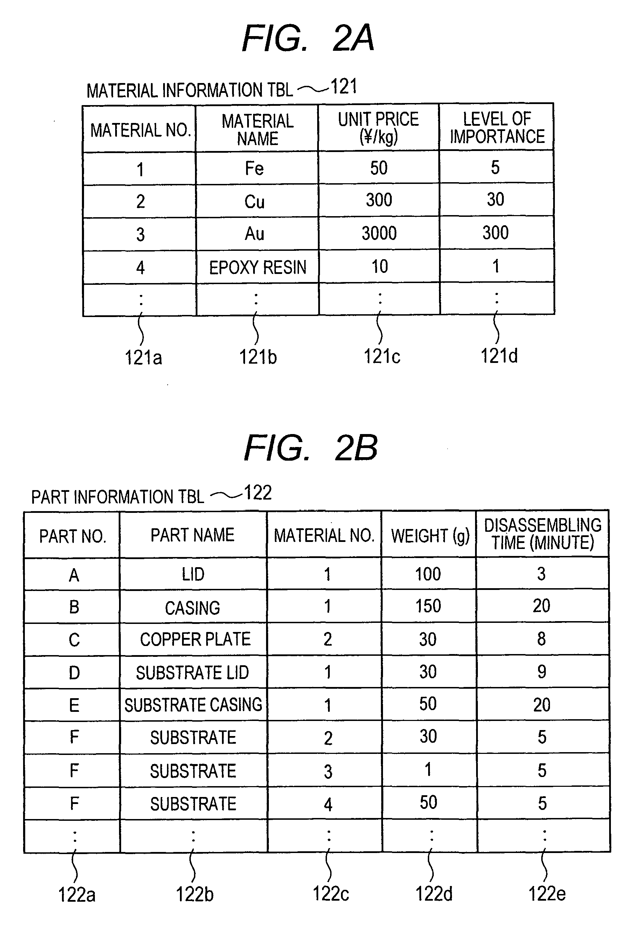

Fig. 2A is a view illustrating an example of data stored in the material information table 121. As shown in Fig. 2A, the material information table 121 that is provided in the storage device 120 stores a material number area 121a in which a material number assigned to each of materials is stored, a material name area 121b in which a material name is stored, a unit price area 121c in which a unit price of a material is stored, and a level of importance area 121d in which a level of importance of a material is stored so as to be associated with each other.

Fig. 2B is a view illustrating an example of data stored in the part information table 122. As shown in Fig. 2B, the part information table 122 stores a part number area 122a in which a part number assigned to each of parts is stored, a part name area 122b in which a part name is stored, a material number area 122c in which a material number indicating which material configures a part is stored, a weight area 122d in which a weight of a material configuring a part is stored, and a disassembling time area 122e in which a disassembling time of the part is stored so as to be associated with each other.

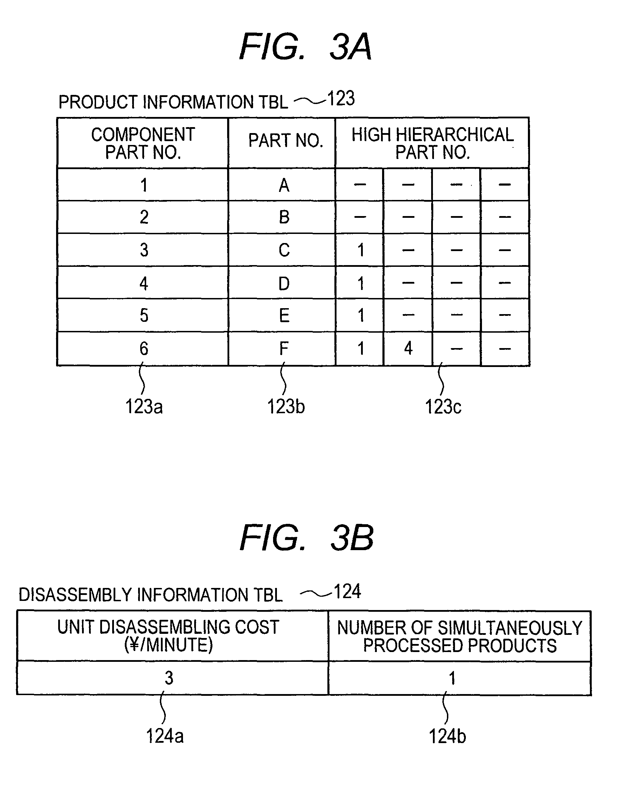

Fig. 3A is a view illustrating an example of data stored in the product information table 123. As shown in Fig. 3A, the product information table 123 stores a component part number area 123a in which a component part number of a part configuring a product is stored, a part number area 123b in which a part number indicating a part of each component part number is stored, and a higher hierarchical part number area 123c in which a part number of a higher hierarchical part of the part is stored so as to be associated with each other.

Fig. 3B is a view illustrating an example of data stored in the disassembly information table 124. As shown in Fig. 3B, the disassembly information table 124 stores a unit disassembling cost area 124a in which a disassembling cost per unit time is stored, and a number of simultaneously processed products area 124b in which the number of products to be simultaneously processed is stored so as to be associated with each other.

The above tables 121 to 124 are received from the external by the data receiving unit 111 at the beginning of the auto-disassemblability evaluation process by the auto-disassemblability evaluation device 100 to be stored in corresponding areas of the tables 121 to 124.

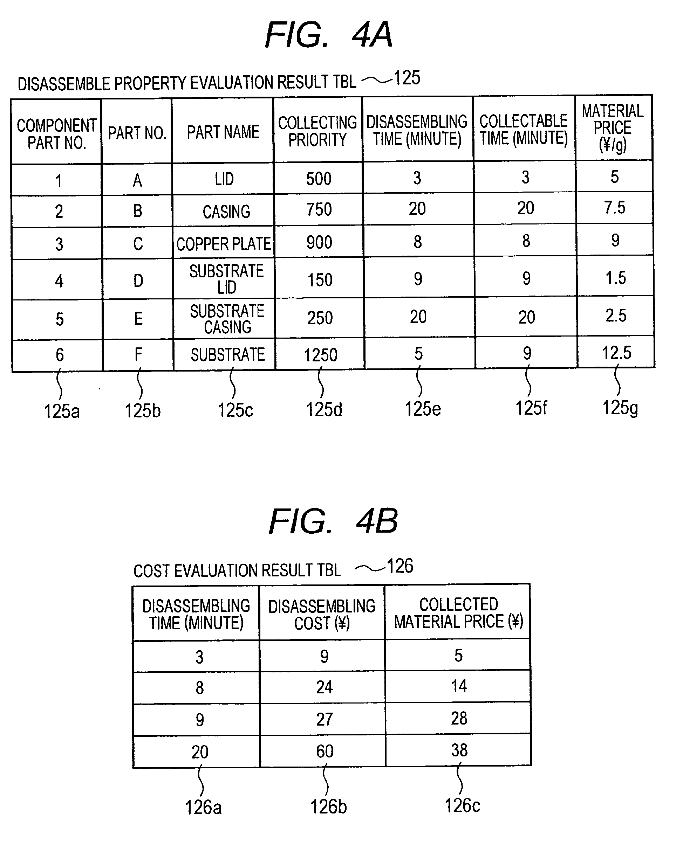

Fig. 4A is a view illustrating an example of data stored in the disassembly availability evaluation result table 125. As shown in Fig. 4A, the disassembly availability evaluation result table 125 stores a component part number area 125a in which a component part number of a part configuring a product is stored, a part number area 125b in which a part number indicating a part of each component part number is stored, a part name area 125c in which a part name is stored, a collecting priority area 125d in which a collecting priority of a part is stored, a disassembling time area 125e in which a disassembling time of a part is stored, a collectable time area 125f in which a collectible time of a part is stored, and a material price area 125g in which a price of a material configuring a part is stored so as to be associated with each other.

Fig. 4B is a view illustrating an example of data stored in the cost evaluation result table 126. As shown in Fig. 4B, the cost evaluation result table 126 stores a disassembly processing time area 126a in which a disassembly processing time is stored, a disassembling cost area 126b in which a disassembling cost for the disassembly processing time is stored, and a collected material price area 126c in which a collected material price for the disassembly processing time is stored so as to be associated with each other.

Data in the areas of the tables 125 and 126 is stored when the values are derived in the course of the auto-disassemblability evaluation.

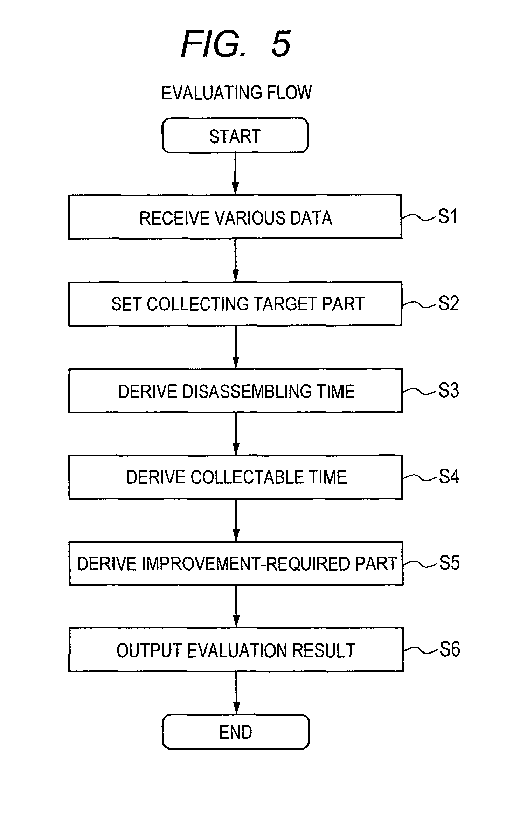

Next, an operation of the auto-disassemblability evaluation device 100 according to the embodiment will be described. Fig. 5 is a flowchart illustrating evaluating procedures that are performed by an auto-disassemblability evaluation device 100.

As shown in Fig. 5, first, the data receiving unit 111 of the auto-disassemblability evaluation device 100 receives material information, product information, and disassembly information and then the data is stored in corresponding tables of the storage device 120 (step S1).

Specifically, the data receiving unit 111 receives various information such as material information or design information of a product that is stored in the disk recording and reproducing device 140 and the recycle factory server 201 and the product data server 202 which are connected thereto through the communicating device 150 or input information from the keyboard or mouse 162 and stores data to be stored in the material information table 121, data to be stored in the part information table 122, data to be stored in the product information table 123, and data to be stored in the disassembly information table 124 in corresponding areas of the tables 121 to 124.

For example, as the data to be stored in the material information table 121, when the data receiving unit 111 receives "1" as the material number, "Fe" as a material name of the material, "50 (¥/Kg)" as a unit price of the material, and "5" as a level of importance, the data receiving unit 111, as shown in Fig. 2A, stores "1" in the material number area 121a of the material information table 121, "Fe" in the material name area 121b, "50" in the unit price area 121c, and "5" in the level of importance area 121d. Here, the level of importance is derived to be set by a manager in advance in accordance with information indicating a value of the material (scarcity value) such as a market price, the number of exhausted years, annual production, annual consumption, or a value of annual consumption of a device user.

As data to be stored in the part information table 122, when the data receiving unit 111 receives "A" as a part number, a "lid" as a name of the part, "1" as a material number of a material configuring the part, "100 (g)" as a weight of the material configuring the part, and "3 (minutes)" as a disassembling time of the part, the data receiving unit 111, as shown in Fig. 2B, stores "A" in the part number area 122a of the material information table 122, the "lid" in the part name area 122b, "1" in the material number area 122c, "100" in the weight area 122d, and "3" as in the disassembling time area 122e. Here, the disassembling time is a value calculated from disassembling device information such as output or part information such as a value of physical property of a material or a value obtained from the past record of automatic disassembly.

As data to be stored in the product information table 123, when the data receiving unit 111 receives "3" as a component part number, "C" as a part number of the part, and "1" as a part number of a higher hierarchical part of the part, the data receiving unit 111, as shown in Fig. 3A, stores "3" in the component part number area 123a of the product information table 123, "C" in the part number area 123b, and "1" in the higher hierarchical part number area 123c. Here, the higher hierarchical part is a part that is determined as a part that has a possibility of hindering the collection of the part based on the design information such as 3DCAD information.

As data to be stored in the disassembly information table 124, when the data receiving unit 111 receives "3 (Y/minute) as a disassembling cost per unit time and "1" as the number of products to be simultaneously processed, the data receiving unit 111, as shown in Fig. 3B, stores "3" in the unit disassembling cost area 124a and "1" in the number of simultaneously processed products area 124b.

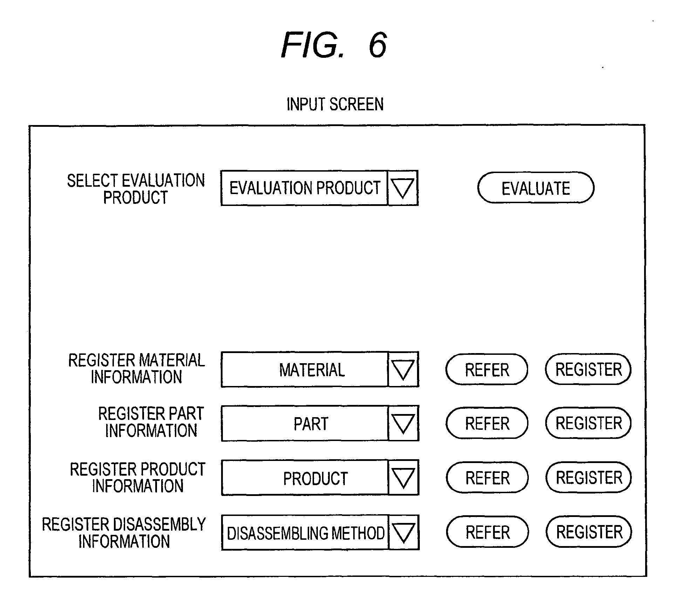

At the time of receiving the data (step S1), an input screen as shown in Fig. 6 is displayed on the display device. A device user selects or presses a referring button from a pull-down menu to designate a storing location of the data to input a variety of information, and the device receives the information.

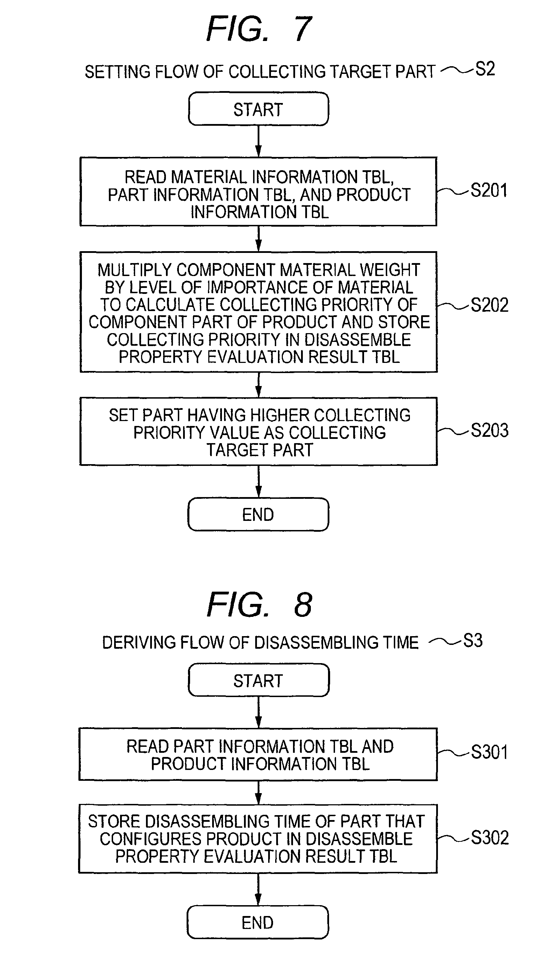

When the data receiving procedure (step S1) by the data receiving unit 111 is completed and the device user selects an evaluating product on the input screen as shown in Fig. 6 and presses the evaluating button, a setting procedure of a collecting target part (step S2) is performed. Continuously, the setting procedure of the collecting target part (step S2) will be described. Fig. 7 is a flowchart illustrating a procedure of setting a collecting target part (step S2) shown in Fig. 5.

As shown in Fig. 7, first, the collecting target part setting unit 112 reads out the material information table 121 to obtain data of the material number area 121a and the level of importance area 121d and reads out the part information table 122 to obtain the part number area 122a, the part name area 122b, the material number area 122c, and the weight area 122d. Further, the collecting target part setting unit 112 reads out the product information table 123 to obtain the component part number area 123a and the part number area 123b, stores the component part number in the component part number area 125a of the disassembly availability evaluation result table 125, stores the part number in the product information table 123 corresponding to the component part number in the part number area 125b, and stores the part name in the part information table 122 corresponding to the part number in the part name area 125c (step S201). For example, the part number of the component part No. "1" in the product information table 123 is "A" and the part name of the part No. "A" in the part information table 122 is a "lid". Therefore, in the disassembly availability evaluation result table 125, "1" is stored in the component part number area 125a, "A" is stored in the part number area 125b, and the "lid" is stored in the part name area 125c.

Next, a collecting priority is calculated by multiplying a value of the weight area 122d of the part information table 122 corresponding to the part number stored in the part number area 125b of the disassembly availability evaluation result table 125 in step S201 by a value of the level of importance area 121d of the material information table 121 corresponding to the material number of a material configuring the part and stored in the collecting priority area 125d of the disassembly availability evaluation result table 125 (step S202). For example, the weight of the part No. "A" stored in the part number area 125b in the disassembly availability evaluation result table 125 is "100 (g)", and the level of importance of the part No. "1" configuring the part No. "A" is "5". Therefore, the value "500" of the collecting priority obtained by multiplying the values is stored in the collecting priority area 125d of the disassembly availability evaluation result table 125.

Next, a part having a large value of the collecting priority calculated in step S202 (the collecting priority is high) is set as a collecting target part (step S203). For example, in the disassembly availability evaluation result table 125 shown in Fig. 4A, among the values stored in the collecting priority area 125d, 900 and 1250 are large values. Therefore, parts whose component part Nos. are "3" and "6" are set as collecting target parts. Here, the number of parts which are the collecting target parts may be varied in accordance with the situation. With this, the procedure of setting the collecting target part (step S2) is completed.

When the procedure of setting the collecting target part (step S2) by the collecting target part setting unit 112 is completed, a procedure of deriving the disassembling time (step S3) is performed. Fig. 8 is a flowchart illustrating a procedure of deriving a disassembling time (step S3) shown in Fig. 5.

As shown in Fig. 8, first, the disassembling time deriving unit 113 reads out the part information table 122 to obtain the part number area 122a and the disassembling time area 122e and reads out the product information table 123 to obtain the component part number area 123a and the part number area 123b (step S301).

Next, the disassembling time deriving unit 113 stores the disassembling time of a part corresponding to the component part number stored in the component part number area of the disassembly availability evaluation result table 125 in the disassembling time area 125e of the disassembly availability evaluation result table 125 (step S302). For example, since the part number of the component part No. "1" in the disassembly availability evaluation result table 125 is "A" and the disassembling time of the part No. "A" in the part information table 122 is "three (minutes)", the value "three (minutes)" of the disassembling time is stored in the disassembling time area 125e of the disassembly availability evaluation result table 125. With this, the procedure of deriving the disassembling time (step S3) is completed.

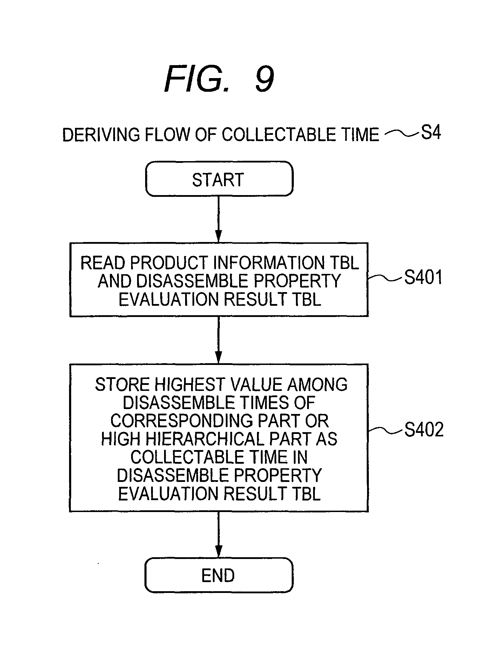

When the procedure of deriving the disassembling time (step S3) of the disassembling time deriving unit 113 is completed, a procedure of deriving a collectable time (step S4) is performed. Fig. 9 is a flowchart illustrating a procedure of deriving a collectable time (step S4) shown in Fig. 5.

As shown in Fig. 9, first, the collectable time deriving unit 114 reads out the product information table 123 to obtain the component part number area 123a and the higher hierarchical part number area 123c and reads out the disassembly availability evaluation result table 125 to obtain the component part number area 125a and the disassembling time area 125e (step S401). Next, the largest value between a disassembling time of a part corresponding to the component part number stored in the component part number area 125a of the disassembly availability evaluation result table 125 and a disassembling time of the higher hierarchical part of the part in the product information table 123 is stored in the collectable time area 125f of the disassembly availability evaluation result table 125 (step S402).

For example, the disassembling time of the component part No. "6" in the disassembly availability evaluation result table 125 is "five (minutes)", and the disassembling times of the component part number "1" and the component part No. "4" which are higher hierarchical parts are "three (minutes)" and "nine (minutes)", respectively. Therefore, the highest value, "nine (minutes)" is stored in the collectable time area 125f of the disassembly availability evaluation result table 125, which indicates that the component part Nos. "1" and "4" are completely disassembled in addition to the component part No. "6" in order to collect the component part No. "6" and the required time is "nine (minutes)" for the component part No. "4" having the longest disassembling time. With this, the procedure of deriving the collectable time (step S4) is completed.

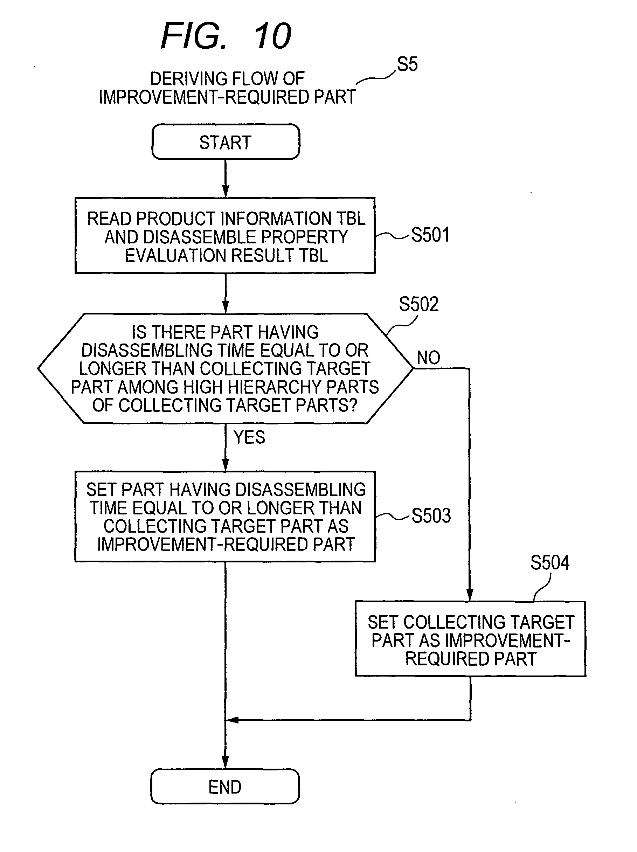

When the procedure of deriving the collectable time (step S4) by the collectable time deriving unit 114 is completed, a procedure of deriving an improvement required part (step S5) is performed. Fig. 10 is a flowchart illustrating a procedure of deriving an improvement required part (step S5) shown in Fig. 5.

As shown in Fig. 10, first, the improvement required part deriving unit 115 reads out the product information table 123 to obtain the component part number area 123a and the higher hierarchical part number area 123c and reads out the disassembly availability evaluation result table 125 to obtain the component part number area 125a and the disassembling time area 125e (step S501).

Next, it is determined whether there is a part having a value of the disassembling time which is equal to or larger than that of a part that is set as the collecting target part in step S2 among the higher hierarchical parts of the part, and then a sequence proceeds to next procedure (step S502). For example, the higher hierarchical part of the component part No. "3" that is set as the collecting target part in step S2 is the component part No. "1", and the higher hierarchical part of the component part No. "6" is the component part Nos. "1" and "4". Further, there is no part having a value of the disassembling time which is equal to or larger than that of a part of the component part No. "3" among the higher hierarchical parts of the part, and thus a sequence proceeds to a procedure of step S504. In contrast, since a value of the disassembling time of a part of the component part No. "4" which is the higher hierarchical part is larger than that of a part of the component part No. "6", a sequence proceeds to a procedure of step S503.

After processing step S502, if it is determined that there is a part having a value of the disassembling time which is equal to or larger than that of the part among the higher hierarchical parts of the collecting target part in step S502 (step S502: Yes), the improvement required part deriving unit 115 set the part as an improvement required part (step S503). For example, since the component part No. "4" which is a higher hierarchical part of the component part No. "6" has a value of the disassembling time which is larger than that of the component part No. "6", the component part No. "4" is set as an improvement required part. Further, the improvement required part refers to a part that lowers the disassembly availability of a product among the higher hierarchical parts of the collecting target part.

In contrast, if it is determined that there is no part having a value of the disassembling time which is equal to or larger than that of the part among the higher hierarchical parts of the collecting target part in step S502 (step S502: No), the improvement required part deriving unit 115 sets the collecting target part as an improvement required part (step S504). For example, since there is no part having a value of a disassembling time which is equal to or larger than that of the part of the component part No. "3" among the higher hierarchical parts, the component part No. "3" which is a collecting target part is set as an improvement required part. With this, the procedure of deriving the improvement required part (step S5) is completed.

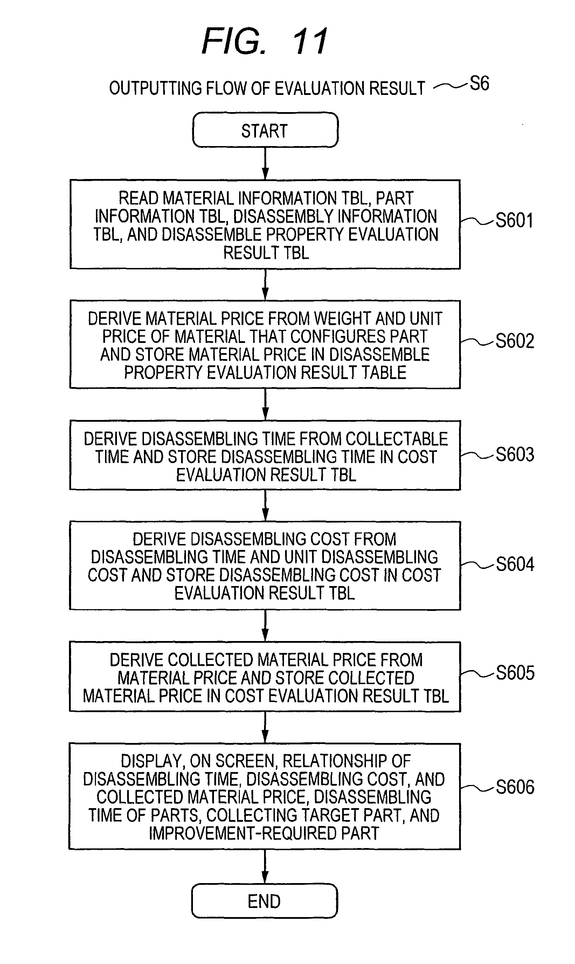

When the procedure of deriving the improvement required part by the improvement required part deriving unit 115 (step S5) is completed, a procedure of outputting an evaluation result (step S6) is performed. Fig. 11 is a flowchart illustrating a procedure of outputting an evaluation result (step S6) shown in Fig. 5.

As shown in Fig. 11, first, the display controller 116 reads out the material information table 121 to obtain the material number area 121a, the material name area 121b, and the unit price area 121c and reads out the part information table 122 to obtain the part number area 122a, the material number area 122c, and the weight area 122d. Further, the display controller 116 reads out the disassembly information table 124 to obtain the unit disassembling cost area 124a and the number of simultaneously processed products area 124b and reads out the disassembly availability evaluation result table 125 to obtain the component part number area 125a, the part number area 125b, the part name area 125c, and the collectable time area 125f (step S601).

Next, the display controller 116 multiplies a value of a weight of a material configuring a part corresponding to the component part number stored in the component part number area 125a of the disassembly availability evaluation result table 125 by a value of the unit price area 121c of the material information table 121 to derive the material price, and then stores the material price in the material price area 125g of the disassembly availability evaluation result table 125 (step S602). For example, when the component material of the component part No. "1" is "Fe", the weight thereof is "100 (g)", and the unit price of "Fe" is "50 (¥/Kg)", the value obtained by multiplying the above values, "5 (¥)" is stored in the material price area 125g of the disassembly availability evaluation result table 125.

The display controller 116 derives the disassembly processing time when the part is collectable from a value of the collectable time stored in the collectable time area 125f of the disassembly availability evaluation result table 125 and stores the derived disassembly processing time in the disassembly processing time area 126a of the cost evaluation result table 126 (step S603). For example, from the collectable time area 125f of the disassembly availability evaluation result table 125, using the fact that the collectable time of a part of the component part No. "1" is "three (minutes)", the collectable time of a part of the component part No. "2" is "twenty (minutes)", the collectable time of a part of the component part No. "3" is "eight (minutes)", the collectable time of a part of the component part No. "4" is "nine (minutes)", the collectable time of a part of the component part No. "5" is "twenty (minutes)", and the collectable time of a part of the component part No. "6" is "nine (minutes)", "three (minutes)" is stored as a disassembly processing time when the part of the component part No. "1" is collectable, "eight (minutes)" is stored as a disassembly processing time when the part of the component part No. "3" is collectable, "nine (minutes)" is stored as a disassembly processing time when the parts of the component part Nos. "4" and "6" are collectable, and "twenty (minutes)" is stored as a disassembly processing time when the parts of the component part Nos. "2" and "5" are collectable, in the disassembly processing time area 126a of the cost evaluation result table 126.

Next, the display controller 116 derives the disassembling cost by multiplying a value of the disassembly processing time area 126a of the cost evaluation result table 126 by a value of the unit disassembling cost area 124a of the disassembly information table 124 and then dividing the multiplied value by a value of the number of simultaneously processed products area 124b and then stores the value in the disassembling cost area 126b of the cost evaluation result table 126 (step S604). For example, when the disassembling time from the disassembly processing time area 126a of the cost evaluation result table 126 is "three (minutes)", using the fact that the value of the unit disassembling cost is "three (¥/minute)" and the value of the number of simultaneously processed products is "one", the values of the disassembly processing time and the unit disassembling cost are multiplied and then divided by the value of the number of simultaneously processed products to derive the value of the disassembling cost, "9 (¥)", and the value is stored in the disassembling cost area 126b of the cost evaluation result table 126.

Continuously, the display controller 116 derives a material cost of a collectable part when the disassembly processing time becomes a value of the disassembly processing time area 126a of the cost evaluation result table 126 from a value of the material cost area 125g of the disassembly availability evaluation result table 125 and stores the derived value in the collected material cost area 126c of the cost evaluation result table 126 (step S605). For example, if the disassembly processing time in the disassembly processing time area 126a of the cost evaluation result table 126 is "three (minutes)", a part that is collectable at this timing is only the component part No. "1". Therefore, the value of the collected material cost is "5 (¥)" which is a material cost of the component part No. "1" and the value is stored in the collected material cost area of the cost evaluation result table 126. If the disassembly processing time is "nine (minutes)", parts that are collectable at this timing are parts of the component part Nos. "1", "3", "4", and "6". Therefore, the value of the collected material cost is "28 (¥)" which is the total of material costs of the parts and the value is stored in the collected material cost area of the cost evaluation result table 126.

Next, the display controller 116 creates a graph having a disassembly processing time as a horizontal axis and a disassembling cost and a collected material cost as a vertical axis using values of the disassembly processing time area 126a, the disassembling cost area 126b, and the collected material price area 126c of the cost evaluation result table 126. Further, the display controller 116 creates a graph that uses the component part number as a horizontal axis and a disassembling time as a vertical axis to show the collecting target part and the improvement required part using values of the component part number area 125a and the disassembling time area 125e of the disassembly availability evaluation result table 125. The display controller 116 displays, on a display device 151, the graphs, the time when the collecting target part is collectable, the disassembling cost at the timing, the collected part price, and the improvement effect when the disassembling time of the higher hierarchal part of the collecting target part set as the improvement required part is improved to be lower than the collectable time of the collecting time part (step S606).

Fig. 12 is a view illustrating a state that a graph created as described above is displayed on the display device 161. As shown in the left part of Fig. 12, the display controller 116 creates a graph having the disassembly processing time as a horizontal axis and the disassembling cost and the collected material price as a vertical axis using the disassembly processing time area 126a, the disassembling cost area 126b, and the collected material price area 126c of a cost evaluation table 126. Further, as shown in the right part of Fig. 12, the display controller 116 creates a graph that uses the component part number as a horizontal axis and the disassembling time as a vertical axis to show the collecting target part and the improvement required part using values of the component part number area 125a and the disassembling time area 125e of the disassembly availability evaluation result table 125.

Around the created graphs, the names "copper plate" and "substrate" of the component part Nos. "3" and "6" of the collecting target parts, the value, "nine minutes", of the time when all the above parts are collectable, the disassembling cost, "27 ¥", and the collected material price "28 ¥" are displayed. Further, around the graphs, the names "copper plate" and "substrate lid" of the component part Nos. "3" and "4" which are the improvement required parts are displayed. The collectable time "eight minutes", the disassembling cost "24 ¥", and the collected material price "28 ¥" when the disassembling time of the "substrate lid" which is a higher hierarchical part of the collecting target part "substrate" set as the improvement required part is improved so as to be shorter than the disassembling time of the "copper plate" are displayed as improvement effect. Further, around each of the values, variations such as "(- one minute)" or "(-3 ¥)" are displayed. As described above, the display controller 116 displays, on the display device, a collecting target part, a time when the collecting target part is collectable, a disassembling cost at this time, a collected material price, an improvement required part, and the improvement effect when the improvement required part is improved. When the procedure of outputting the evaluation result (step S6) is completed, all the evaluating procedures performed by the auto-disassemblability evaluation device 100 are completed.

As described above, in the auto-disassemblability evaluation device 100 that evaluates the disassembly availability of a product configured by a plurality of parts, the storage device 100 stores materials of the parts, a level of importance indicating the values of the materials, and weights of the parts so as to be associated with the parts, the collecting target part setting unit 112 calculates the priority for collecting the part for every part based on the materials of the parts, the level of importance, and the weights of the parts stored in the storage device 120 and sets a part having the higher level of calculated priority as the collecting target part. Accordingly, it is possible to set a part to be a target of recycling in accordance with the values of the materials configuring the part.

The storage device 120 further stores the unit price of the material and the collectable time set by the collectable time deriving unit 114 so as to be associated with the collecting target part, and the display controller 116 calculates the price of the part and the price of the collecting target part based on the unit price of the material, the weight of the part, and the weight of the collecting target part and calculates the price of the collected materials that are collected until the collectable time of the collecting target parts based on the calculated price of the part, the price of the collecting target part, the collectable time of the part, the collectable time of the collecting target part, and a predetermined disassembling cost of the product per unit time. Therefore, it is possible to estimate the time when the part is collectable by the automatic disassembly in consideration of the structure of the product and evaluate the recyclability of the automatic disassembly.

In other words, the auto-disassemblability evaluation device 100 shows the collecting target part, the time when the collecting target part is collectable, the disassembling cost at that time, the collected material price, the improvement required part, and the improvement effect when the part is improved. Accordingly, for example, a designer of a product may understand an improvement-required point for improving the disassembly availability of the part which is configured by materials having a higher level of importance and becomes a collecting target and thus easily check the improvement for improving the disassembly availability. In the graph shown in the right part of Fig. 12, after the disassembly processing time elapses around 10 minutes, the rate of increase in disassembling cost is higher than the rate of increase in price of the collected material. Therefore, it can be seen that, if the disassembling processing is performed until approximately at least 10 minutes have elapsed, the parts may be more efficiently collected.

Further, in the position of a product manager who manages the products, the product manager may ask a designer to design a product for reducing the disassembling time. Furthermore, a recycling company may figure out a disassembling time required to disassemble the product and the product manager may ask the recycling company to efficiently perform recycling.

The above-described procedures may be executed by a program (auto-disassemblability evaluation program), and the auto-disassemblability evaluation program is recorded and the provided in a computer readable recording medium such as a CD-ROM, a flexible disk (FD), or a CD-R, a DVD (digital versatile disk), as an installable format or executable format file.

The auto-disassemblability evaluation program that is performed by the auto-disassemblability evaluation device 100 according to the embodiment may be configured to be stored in a computer connected to a network such as Internet and downloaded via the network to be provided. Further, the auto-disassemblability evaluation program that is performed by the auto-disassemblability evaluation device 100 according to the embodiment may be configured to be provided or distributed via a network such as Internet. The auto-disassemblability evaluation program according to the embodiment may be configured to be assembled in a ROM in advance.

The auto-disassemblability evaluation program that is performed by the auto-disassemblability evaluation device 100 according to the embodiment is configured by a module including the above-mentioned units (the data receiving unit, the collecting target part setting unit, the disassembling time deriving unit, the collectable time deriving unit, the improvement required part deriving unit, and the display controller). As actual hardware, a CPU reads out and executes the auto-disassemblability evaluation program from the recording medium so that the above-mentioned units are loaded on a main memory device and the data receiving unit, the collecting target part setting unit, the disassembling time deriving unit, the collectable time deriving unit, the improvement required part deriving unit, and the display controller are generated on the main memory device.

Further, the present invention is not limited to the above embodiments, and various changes and modifications may be made in the embodied steps without departing from the spirit of the present invention. Further, a plurality of the components disclosed in the embodiments may be appropriately combined to form variation of the present invention. For example, some of components may be omitted from all components disclosed in the embodiments. Further, components of another embodiment may be appropriately combined.

## Claims

1. An auto-disassemblability evaluation device that evaluates disassembly availability of a product configured by a plurality of parts, comprising:
a storage unit configured to store a material of the parts, a level of importance indicating the value of the material, and a weight of the parts so as to be associated with the parts; and
a collecting target part setting unit configured to calculate a priority for collecting the parts for every part based on the material of the parts, the level of importance, and the weight of the parts stored in the storing unit and set a product having a higher calculated priority as a collecting target part.

2. The auto-disassemblability evaluation device of claim 1,
wherein the stoage unit further stores hierarchical information indicating a hierarchical relationship between the part and another part having a possibility of hindering the collection of the part and a disassembling time of the part so as to be associated with the parts, and
the auto-disassemblability evaluation device further includes a collectable time deriving unit configured to specify the other part which is a higher hierarchial part of the collecting target part based on the collecting target part and the hierarchial information and set a longer disassembling time between a disassembling time of the specified other part and a disassembling time of the collecting target part as a collectable time of the collecting target part.

3. The auto-disassemblability evaluation device of claim 2, wherein when the number of other parts which are higher hierarchical parts of the collecting target part is plural, the collectable time derving unit sets the longest disassembling time among disassembling times of the other parts as the collectable time of the collecting target part.

4. The auto-disassemblability evaluation device of claim 2 or 3, further comprising an improvement required part deriving unit configured to determine whether the disassembling time of the other part which is the higher hierarchical part of the collecting target part is longer than the disassembling time of the collecting target part, set the other part which is the higher hierarchical part of the collecting target part as an improvement required part that lowers disassembly availability of the product if it is determined that the disassembling time of the other part which is the higher hierarchical part of the collecting target part is longer than the disassembling time of the collecting target part, and set the collecting target part as an improvement required part if it is determined that the disassembling time of the other part which is the higher hierarchical part of the collecting target part is not longer than the disassembling time of the collecting target part.

5. The auto-disassemblability evaluation device of any one of claims 2 to 4,
wherein the storage unit further stores a unit price of the material and the collectable time set by the collectable time deriving unit so as to be associated with the collecting target part, and
the auto-disassemblability evaluation device further comprises a controller configured to calculate a price of the part and a price of the collecting target part based on the unit price of the material, the weight of the part, and the weight of the collecting target part and calcualte a price of the collected material which is collected until the collectable time of the collecting target part based on the calculated price of the part, the calculated price of the collecting target part, the collectable time of the part, the collectable time of the collecting target part, and a predetermined disassembling cost of the product per unit time.

6. An auto-disassemblability evaluation method that is performed by an auto-disassemblability evaluation device that evaluates disassembly availability of a product configured by a plurality of parts, comprising:
a calculating step of reading out a material of the parts, a level of importance, and a weight of the parts from a storage unit that stores in advance a material of the parts, a level of importance indicating the value of the material, and a weight of the parts so as to be associated with the parts, to calculate a priority for collecting the parts for every part; and
a setting step of setting a part having the calcualted higher priority as a collecting target part.

7. The auto-disassemblability evaluation method of claim 6,
wherein in the data, hierarchical information indicating a hierarchical relationship between the part and another part having a possibility of hindering the collection of the part and a disassembling time of the part are associated with the parts, and
the auto-disassemblability evaluation method further comprises a collectable time deriving step of specifying the other part which is a higher hierarchial part of the collecting target part based on the collecting target part and the hierarchial information and setting a longer disassembling time between a disassembling time of the specified other part and a disassembling time of the collecting target part as a collectable time of the collecting target part.

8. The auto-disassemblability evaluation method of claim 7, further comprising:
an improvement requried part deriving step of determining whether the disassembling time of the other part which is the higher hierarchical part of the collecting target part is longer than the disassembling time of the collecting target part, setting the other part which is the higher hierarchical part of the collecting target part as an improvement required part that lowers disassembly availability of the product if it is determined that the disassembling time of the other part which is the higher hierarchical part of the collecting target part is longer than the disassembling time of the collecting target part, and setting the collecting target part as an improvement required part if it is determined that the disassembling time of the other part which is the higher hierarchical part of the collecting target part is not longer than the disassembling time of the collecting target part.

9. The auto-disassemblability evaluation method of claim 7 or 8,
wherein in the data, a unit price of the material and the collectable time set by the collectable time deriving unit are further associated with the collecting target part, and
the auto-disassemblability evaluation method further comprises a calculating step of calculating a price of the part and a price of the collecting target part based on the unit price of the material, the weight of the part, and the weight of the collecting target part and calcualting a price of the collected material which is collected until the collectable time of the collecting target part based on the calculated price of the part, the calculated price of the collecting target part, the collectable time of the part, the collectable time of the collecting target part, and a predetermined disassembling cost of the product per unit time.

10. An auto-disassemblability evaluation program for evaluating disassembly availability of a product configured by a plurality of parts that allows a computer to execute:
a calculating step of reading out a material of the parts, a level of importance, and a weight of the parts from a storage unit that stores in advance a material of the parts, a level of importance indicating the value of the material, and a weight of the parts so as to be associated with the parts, to calculate a priority for collecting the parts for every part; and
a setting step of setting a part having the calcualted higher priority as a collecting target part.
